# EUROPÄISCHE PATENTSCHRIFT

(11) **EP 0 472 548 B1**
(45) Veröffentlichungstag und Bekanntmachung des Hinweises auf die Patenterteilung: **03.08.1994**
(21) Anmeldenummer: 90906906.4
(22) Anmeldetag: 17.05.1990
(51) Int. Cl.: F16J 15/32, B23Q 1/08, B24B 23/02

(54) **HANDWERKZEUG MIT EINEM GETRIEBEGEHÄUSE MIT DICHTRING**
PORTABLE TOOL COMPRISING A DRIVE HOUSING WITH PACKING RING
OUTIL A MAIN COMPORTANT UN CARTER DE PROTECTION A BAGUE D'ETANCHEITE

(30) Priorität: 20.05.1989 DE 3916495
(43) Veröffentlichungstag der Anmeldung: 04.03.1992
(73) Patentinhaber: ROBERT BOSCH GMBH, 70442 Stuttgart (DE)
(72) Erfinder: KIRN, Manfred, D-7000 Stuttgart 80 (DE)
(86) Internationale Anmeldenummer: DE9000369
(87) Internationale Veröffentlichungsnummer: WO9014535

(56) Entgegenhaltungen:
- EP-A- 0 261 374
- DE-A- 2 938 484
- GB-A- 2 123 099

## Beschreibung

### Stand der Technik

Die Erfindung betrifft eine Handwerkzeugmaschine entsprechend der Gattung des Anspruchs 1.

Aus dem GM 79 31 401 ist ein gattungsgemäßes Elektrowerkzeug bekannt. Dessen Getriebegehäusewandungen sind mit Öffnungen versehen, die von An- und Antriebswellen durchdrungen und durch axiale Gleitringdichtungen gegen Schmiermittelaustritt abgedichtet werden.

Im Vergleich mit bisherigen Lösungen fuhrt die Anwendung dieser axialen Gleitringdichtungen zu besseren Dichtergebnissen, jedoch auch zu einer deutlichen Verteuerung der Maschine. Ursache dafür ist der hohe Bearbeitungsaufwand für die erforderliche, geringe Rauhtiefe der Gegengleitbahn der axialen Gleitringdichtungen und deren im Vergleich zu den vorher verwendeten Dichtscheiben höhere Preis.

Aus der DE-A-29 38 484 ist ein drehfest auf einer Welle angeordneter und sich mit dieser mitdrehender Dichtring bekannt, der mit bürstenartigen, dichtenden Fasern exzentrisch in Gewinderillen einer gehäuseseitigen Bohrung anliegt und einen Spalt zwischen der Welle und dem Gehäuse abdichtet.
Dieser Dichtring soll in besonders guter Weise zur Abdichtung drehender Maschinenelemente unter schwierigen Umgebungsbedingungen geeignet sein, beispielsweise für die Abdichtung langsam laufender Lager von Erdbaumaschinen. Er ist für schnellaufende Lager, d.h. auch für Handwerkzeugmaschinen ungeeignet, weil bei höheren Drehzahlen am zu dichtenden Spalt so hohe Umfangsgeschwindigkeiten herrschen, daß der dadurch bedingte Verschleiß insbesondere durch die hochtourige Exzenterbewegung an den Fasern in kurzer Zeit die Dichtwirkung aufhebt.

### Vorteile der Erfindung

Die Handwerkzeugmaschine mit den Merkmalen des Anspruchs 1 hat gegenüber den bekannten Handwerkzeugmaschinen den Vorteil, daß sie mit unverändertem oder nur geringfügig geändertem Fertigungsaufwand und Kosten der Einzelteile, beispielsweise unter Verwendung bisher üblicher Filzdichtungsscheiben, wirksamer abdichtbar ist. Die Dichtung hat eine höhere Lebensdauer als die bekannten Gleitringdichtungen. Dadurch sind für die erfindungsgemäße Handwerkzeugmaschine Schmiermittel einsetzbar, deren Vikosität geringer ist als die der bisher anwendbaren Schmiermittel. Dies erhöht die Lebensdauer der Getriebe und der Motoren. Außerdem ist der Bedarf an Antriebsenergie geringer. Der Wirkungsgrad erfindungsgemäßer Handwerkzeugmaschinen, äußerst wichtig für akkumulatorgetriebene Ausführungen, steigt deutlich an. Weitere, vorteilhafte Ausgestaltungen ergeben sich aus den Unteransprüchen. Eine besonders günstige Ausführungsform einer Dichtscheibe besteht darin, daß die Dichtscheibe mit der Nabe unlösbar verbunden ist, bzw. daß die aus verflüssigbarem Kunststoff bestehende Nabe beginnend am Innenumfang der ringförmigen Dichtscheibe in diese Dichtscheibe eindiffundiert ist. Der Vorteil besteht darin, daß an den Dichtflächen der Dichtscheibe angreifende Kräfte die Nabe und die Dichtscheibe nicht gegeneinander verschieben bzw. voneinander trennen können und daß der Preßsitz der Nabe und damit der Dichtscheibe auf der Welle sehr sicher ist.

### Zeichnung

Die Erfindung ist nachstehend an Ausführungsbeispielen mit zugehöriger Zeichnung beschrieben. Es zeigen Figur 1 einen Teilschnitt einer erfindungsgemäßen Handwerkzeugmaschine, Figur 2 ein erstes, Figur 3 ein zweites und Figur 4 ein drittes Ausführungsbeispiel für die Anordnung einer Dichtscheibe an der Durchtrittsöffnung einer Welle in einem Getriebegehäuse.

### Beschreibung der Ausführungsbeispiele

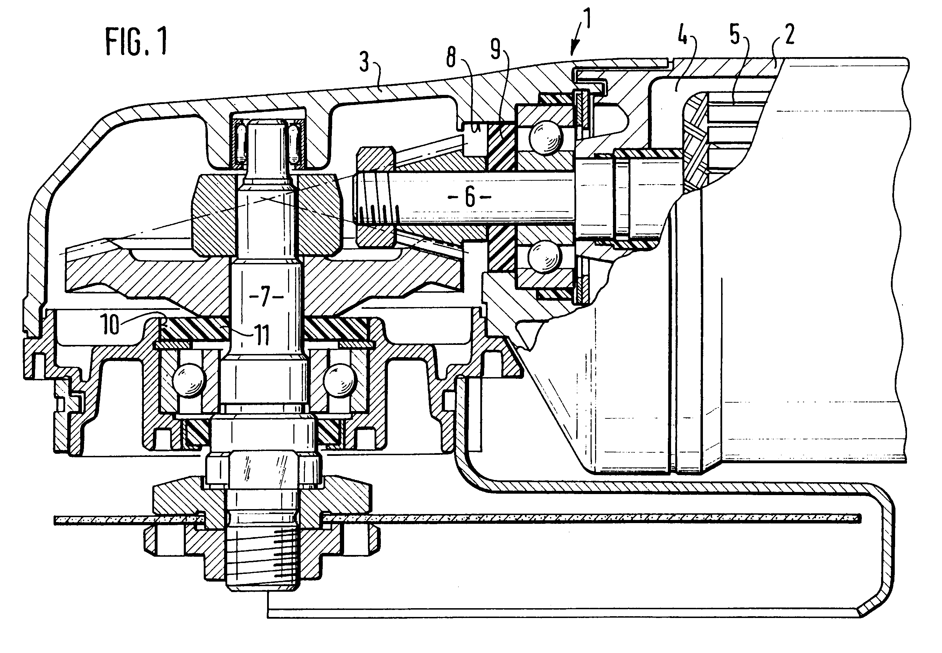

Die in Figur 1 gezeigte Handwerkzeugmaschine 1 weist ein an ein Motorgehäuse 2 geflanschtes Getriebegehäuse 3 auf. Das Motorgehäuse 2 umschließt einen Motorraum 4. In diesem ist ein nicht im einzelnen dargestellter Elektromotor mit einem Rotor 5 angeordnet. Dessen Welle 6 treibt beispielsweise über ein nicht näher erläutertes Winkelgetriebe eine zweite, als Werkzeugspindel dienende Welle 7 an und ragt mit einem Ende durch eine erste Durchtrittsöffnung 8 in das Getriebegehäuse 3.

Die erste Durchtrittsöffnung 8 ist durch eine mitdrehend auf der Welle 6 sitzende Dichtscheibe 9 verschlossen. Ein ungewollter Schmiermittelaustritt aus dem Getriebegehäuse 3 in den Motorraum 4 ist damit unterbunden.

Für die zweite Welle 7 befindet sich am Getriebegehäuse 3 eine zweite, getriebeseitige Durchtrittsöffnung 10, nach außen führt. Diese ist durch eine zweite, ringförmige Dichtscheibe 11 abgedichtet, so daß der Durchtritt von Schmiermittel entlang der zweiten Welle 7 nach außen verhindert ist.

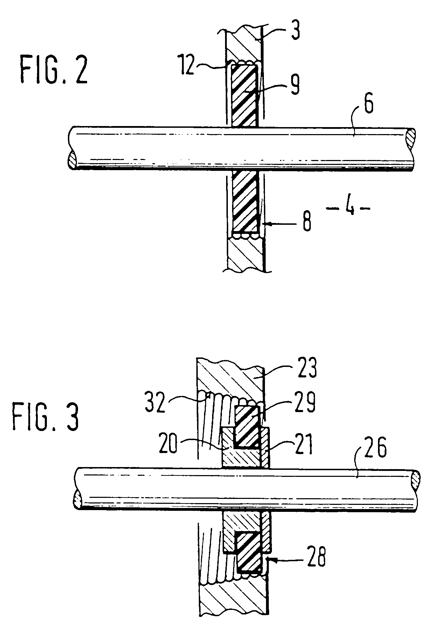

Die in Figur 2 dargestellte Einzelheit aus Figur 1 zeigt die Dichtscheibe 9 zwischen Getriebegehäuse 3 und Motorraum 4 in Form einer Lochscheibe nabenartig unmittelbar auf der Welle 6 sitzend. Der Umfang der Dichtscheibe 9 berührt den Umfang der im Getriebegehäuse 3 angeordneten als zylindrische Bohrung ausgeführten ersten Durchtrittsöffnung 8. Diese ist mit einer Rückförderspiralnut 12 versehen, die gleichsinnig mit der Drehrichtung der Welle 6 zum Inneren des Getriebegehäuses 3 steigend verläuft.

Beim Betreiben der Handwerkzeugmaschine 1 wird sich je nach deren Position die Schmiermittelfüllung des Getriebegehäuses 3 an der ersten Durchtrittsöffnung 8 oder an der zweiten Durchtrittsöffnung 10 sammeln. Durch die gemeinsam mit der Welle 6 rotierende Dichtscheibe 9 wird das Schmiermittel ständig in radialer Richtung nach außen geschleudert und infolge der Pumpwirkung zwischen der Dichtscheibe 9 und der entsprechenden Rückförderspiralnut 12 in das Innere des Getriebegehäuses 3 gefördert.

Für die Handwerkzeugmaschine 1 ist eine statische und auch eine dynamische Abdichtung der ersten und zweiten Durchtrittsöffnung 8, 10 gesichert. Bei stillstehendem Motor reicht der Andruck der Dichtscheibe 9, 11 an den Umfang der ersten und zweiten Durchtrittsöffnungen 8, 10 aus, um einen Schmiermittelaustritt sicher zu unterbinden.

Das in Figur 3 gezeigte Ausführungsbeispiel zeigt eine Dichtscheibe 29, die auf einer Nabe 20 sitzt und durch eine Druckscheibe 21 axial gesichert ist. Die Nabe 20 sitzt drehfest auf der Welle 26. Die Druckscheibe 21 ist - axial an die Dichtscheibe 29 gepreßt - gleichzeitig für diese gegenüber der Nabe 20 bzw. gegenüber der Welle 6 eine Verdrehsicherung. Die Dichtscheibe 29 liegt am Rand der Durchtrittsöffnung 28 des Getriebegehäuses 39 radial an und berührt gleichzeitig Gewindegänge der Rückförderspiralnut 32. Zwischen der Dichtscheibe 29 und der Nabe 20 kann zur axialen Sicherung auch eine Klebeverbindung bestehen.

Bei einem nichtdargestellten Ausführungsbeispiel der Erfindung ist die Nabe der Dichtscheibe ein Kunststoffring, z.B. aus Polyamid, der in flüssiger Form auf die Innenfläche der aus Filz- bzw. Textil-o.ä. porigem Material bestehenden Dichtscheibe im Bereich der vorgesehenen Sitzfläche gespritzt und in diese diffundierend fertig geformt ist.

Auch Filz-Dichtscheiben mit Außensitz, die üblicherweise drehfest in einer Bohrung sitzen und durch die hindurch eine Welle geführt ist, sind auf die vorstehend beschriebene Weise mit einem Kunststoff-Außenring herstellbar.

Für alle Ausführungbeispiele ergibt sich eine weitere, günstige Variante, wenn in den Mantelflächen der Dichtscheiben 9, 11, 29, 49 gewindeartige Nuten eingearbeitet sind und gegebenenfalls auf Rückförderspiralnuten 12, 32, 52 in den Durchtrittsöffnungen 8, 10, 28, 48 verzichtet wird, d.h. wenn diese glatte, zylindrische oder konische Bohrungen sind.

Außerdem ist es für die genannten Dichtscheiben 9, 11, 29 vorteilhaft, wenn an deren dem Schmiermittel abgewandten Seite eine schmiermitteldichte Imprägnierung vorhanden ist.

## Patentansprüche

1. Handwerkzeugmaschine mit einem durch Dichtmittel gegen den Durchtritt niedrigviskoser Schmiermittel nach außen abgedichteten Getriebegehäuse (3), insbesondere Winkelschleifer, mit mindestens einer Durchtrittsöffnung (8, 10) für mindestens eine schnelldrehende Welle (6, 7), dadurch gekennzeichnet, daß das Dichtmittel eine drehfest und dicht auf der Welle (6, 7) sitzende Dichtscheibe (9, 11, 29) enthält, die radial den Umfang der Durchtrittsöffnung (8, 10) berührt, wobei die Dichtscheibe (9, 11, 29) aus für das niedrigviskose Schmiermittel aufnahme- und abgabefähigem Filz- oder Textil- oder ähnlichem porigem Material besteht, daß im Bereich des Innenumfanges der Dichtscheibe (9, 11, 29) verflüssigbarer, verfestigter Kunststoff angereichert ist, so daß eine Nabe (20) als unlösbarer Teil der Dichtscheibe (9, 11, 29) gebildet wird und daß die Durchtrittsöffnung (8, 10) vorzugsweise im von der Dichtscheibe (9, 11, 29) berührten Bereich mit gewindeartigen, in das Innere des Getriebegehäuses (3, 23) weisenden Rückförderspiralnuten (12, 32) versehen ist.

2. Handwerkzeugmaschine nach Anspruch 1, dadurch gekennzeichnet, daß die Dichtscheibe (9, 11, 29) auf einer dem Getriebegehäuse (3) abgewandten Seite für Schmiermittel undurchlässig und auf der anderen Seite durchlässig ist.

3. Handwerkzeugmaschine nach Anspruch 2 oder einem der vorhergehenden Ansprüche, dadurch gekennzeichnet, daß die Dichtscheibe (9, 11, 29) reifenartig, drehfest und dicht auf einer Nabe (20) sitzt, die ihrerseits drehfest und dicht auf der Welle (6, 7) angeordnet ist.

4. Handwerkzeugmaschine nach Anspruch 3 oder einem der vorhergehenden Ansprüche, dadurch gekennzeichnet, daß die Dichtscheibe (9, 11, 29) auf der Nabe (20) über eine Haltescheibe (21) axial fixiert und gegen Verdrehung gesichert ist.

5. Handwerkzeugmaschine nach Anspruch 4 oder einem der vorhergehenden Ansprüche, dadurch gekennzeichnet, daß die Dichtscheibe (9, 11, 29) auf ihrer äußeren, radialen Umfangsfläche mit Spiralnuten versehen ist.

6. Handwerkzeugmaschine nach Anspruch 5 oder einem der vorhergehenden Ansprüche, dadurch gekennzeichnet, daß die aus verflüssigbarem Kunststoff bestehende Nabe (20) beginnend am Innenumfang der ringförmigen Dichtscheibe (9, 11, 29) in diese Dichtscheibe (9, 11, 29) eindiffundiert ist.

7. Handwerkzeugmaschine nach Anspruch 6 oder einem der vorhergehenden Ansprüche, dadurch gekennzeichnet, daß die radiale innere Fläche der Dichtscheibe (6, 11, 29) mit verflüssigbarem, sich verfestigendem Kunststoff beschichtet ist.

8. Handwerkzeugmaschine nach Anspruch 7 oder einem der vorhergehenden Ansprüche, dadurch gekennzeichnet, daß der Innendurchmesser der Dichtscheibe (6, 11, 29) mit Kunststoff ausgespritzt ist.

## Claims

1. Power hand tool with a gearbox casing (3) sealed to the outside by means of sealing material against leakage of lubricant of low viscosity, in particular a right angle grinder, with at least one shaft exit (8, 10) for at least one high-speed shaft (6, 7), characterised by the fact that the sealing material contains a sealing washer (9, 11, 29) which does not rotate and sits tight on the shaft (6, 7), and which radially touches the circumference of the shaft exit (8, 10), the sealing washer (9, 11, 29) consisting of felt or textile or similar porous material which can absorb and release low-viscosity lubricant, that liquefiable, consolidated plastic is concentrated in the area of the inner circumference of the sealing washer (9, 11, 29), so that a hub (20) is formed as a bonded part of the sealing washer (9, 11, 29) and that the shaft exit (8, 10) is preferably equipped, in the area in contact with the sealing washer (9, 11, 29) with screwthread-like recirculating helical grooves (12, 32), which lead into the interior of the gearbox casing (3, 23).

2. Power hand tool in accordance with claim 1, characterised by the fact that the sealing washer (9, 11, 29) is impermeable for lubricant on one side facing away from the gearbox casing (3), and is permeable on the other side.

3. Power hand tool in accordance with claim 2 or one of the preceding claims, characterised by the fact that the sealing washer (9, 11, 29) is tyre-like, non-rotating, and sits tight on a hub (20) which itself does not rotate and fits tightly on the shaft (6, 7).

4. Power hand tool in accordance with claim 3 or one of the preceding claims, characterised by the fact that the sealing washer (9, 11, 29) is fixed axially on the hub (20) by means of a retaining disk (21) and is secured against rotation.

5. Power hand tool in accordance with claim 4 or one of the preceding claims, characterised by the fact that the sealing washer (9, 11, 29) is provided with spiral grooves on its outer radial circumference area.

6. Power hand tool in accordance with claim 5 or one of the preceding claims, characterised by the fact that the hub (20) consisting of liquefiable synthetic is diffused into the sealing washer (9, 11, 29), starting at the inner circumference of the ring-shaped sealing washer.

7. Power hand tool in accordance with claim 6 or one of the preceding claims, characterised by the fact that the radial inner surface of the sealing washer (9, 11, 29) is coated with liquefiable, self-hardening synthetic.

8. Power hand tool in accordance with claim 7 or one of the preceding claims, characterised by the fact that the inner diameter of the sealing washer (9, 11, 29) is sprayed with synthetic.

## Revendications

1. Outil à main comportant un boîtier de transmission (3) rendu étanche par un moyen d'étanchéité, pour éviter le passage vers l'extérieur d'un agent lubrifiant à faible viscosité, notamment meuleuse d'angle, comportant un orifice de passage (8, 10) pour au moins un axe (6, 7) tournant rapidement, caractérisé en ce que le moyen d'étanchéité comprend un disque d'étanchéité (9, 11, 29) solidaire en rotation et de manière étanche de l'axe (6, 7), ce disque touchant radialement la périphérie de l'orifice de passage (8, 10), le disque d'étanchéité (9, 11, 29) étant en une matière poreuse absorbant et retenant l'agent lubrifiant à faible viscosité, en feutre ou matière textile ou matière poreuse analogue, et au niveau de la périphérie intérieure, le disque d'étanchéité (9, 11, 29) est enrichi par une matière plastique liquéfiable, solidifiée, pour former un moyeu (20) comme partie solidaire du disque d'étanchéité (9, 11, 29) et l'ouverture de passage (8, 10) est munie, de préférence dans la zone en contact avec le disque d'étanchéité (9, 11, 29), de rainures en spirale (12, 32) de retour, analogues à un filetage, et qui sont dirigées vers l'intérieur du carter de transmission (3, 23).

2. Outil à main selon la revendication 1, caractérisé en ce que le disque d'étanchéité (9, 11, 29) est imperméable à l'agent lubrifiant du côté opposé au carter de transmission (3) et est perméable de l'autre côté.

3. Outil à main selon la revendication 2 ou la revendication 1, caractérisé en ce que le disque d'étanchéité (9, 11, 29) est monté à la manière d'un pneumatique, solidairement en rotation et de manière étanche sur un moyeu (20) lui-même solidaire en rotation et étanche sur l'axe (6, 7).

4. Outil à main selon la revendication 3 ou l'une des revendications précédentes, caractérisé en ce que le disque d'étanchéité (9, 11, 29) est bloqué axialement sur le moyeu (29) par une rondelle de fixation (21) et il est bloqué en rotation.

5. Outil à main selon la revendication 4 ou l'une des revendications précédentes, caractérisé en ce que le disque d'étanchéité (9, 11, 29) est muni de rainures en spirale sur sa surface périphérique radiale extérieure.

6. Outil à main selon la revendication 5 ou l'une des revendications précédentes, caractérisé en ce que le moyeu (20), réalisé en matière plastique fusible, est infiltré en commençant à la périphérie intérieure du disque d'étanchéité (9, 11, 29) en forme d'anneau, dans ce disque d'étanchéité (9, 11, 29).

7. Outil à main selon la revendication 6 ou l'une des revendications précédentes, caractérisé en ce que la surface radiale intérieure du disque d'étanchéité (6, 11, 29) est revêtue d'une matière plastique liquéfiable et qui se solidifie.

8. Outil à main selon la revendication 7 ou l'une des revendications précédentes, caractérisé en ce que la diamètre intérieur du disque d'étanchéité (6, 11, 29) est rempli par injection de matière plastique.
